Europäisches Patentamt

European Patent Office

Office européen des brevets

(19)

(11) **EP 1 361 015 A1**

(12) **EUROPEAN PATENT APPLICATION**

(43) Date of publication:
**12.11.2003 Bulletin 2003/46**

(51) Int Cl.⁷: **B23K 26/03**

(21) Application number: **03007729.1**

(22) Date of filing: **04.04.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **07.05.2002 IT TO20020376**

(71) Applicant: **C.R.F. Società Consortile per Azioni 10043 Orbassano (TO) (IT)**

(72) Inventors:
• **Alippi, Cesare, c/o C.R.F. Soc. Consor. per A. 10043 Orbassano (Torino) (IT)**

• **D'Angelo, Giuseppe, c/o C.R.F. Soc. Consor. per A. 10043 Orbassano (Torino) (IT)**
• **Invernizzi, Giovanni, c/o C.R.F. Soc. Cons. per A. 10043 Orbassano (Torino) (IT)**
• **Pasquettaz, Giorgio, c/o C.R.F. Soc. Cons. per A. 10043 Orbassano (Torino) (IT)**
• **Piuri, Vincenzo, c/o C.R.F. Soc. Cons. per A. 10043 Orbassano (Torino) (IT)**

(74) Representative: **Notaro, Giancarlo et al c/o Buzzi, Notaro & Antonielli d'Oulx Via Maria Vittoria 18 10123 Torino (IT)**

(54) **System and method for monitoring laser welds, particularly in tailored blanks**

(57) A system and a method for monitoring laser welds, for example laser welds of semi-finished products made up of elements of sheet metal of different thicknesses and/or properties ("tailored blanks"), comprising: laser-welding means, for focusing a laser beam (3) on the structure to be welded; sensor means (6,7,8) designed for detecting the visible radiation produced in the welding area and for emitting at output signals indicating said radiation; and processing means (11) for processing the aforesaid signals at output from said sensor means,

characterized in that said processing means are programmed for processing the aforesaid signals so as to obtain an indication of quality of the weld without the need for a comparison with reference signals.

## Fig.1

EP 1 361 015 A1

## Description

## TEXT OF THE DESCRIPTION

The subject of the present invention is a system and a method for monitoring laser welds, for example welds of semi-finished products made up of elements of sheet metal of different thicknesses and/or properties ("tailored blanks").

The assembly by means of welding of semi-finished products made up of elements of sheet metal of different thicknesses and/or chemical properties (for example with different surface properties) has witnessed a growing diffusion in recent years in the automobile industry. Said technology enables selection of the optimal thicknesses of the various elements of sheet metal for different areas of the vehicle, according to the different stresses to which these areas are subjected. It is thus possible to eliminate auxiliary reinforcement parts and obtain vehicle structures that are lighter and involve a simplified production cycle.

The purpose underlying the present invention is that of providing a simple and reliable system and method that will enable monitoring of the quality of laser welds, with particular reference to the laser welding of "tailored blanks". It is evident, however, that the application of the invention to monitoring of the laser welding also of components other than tailored blanks is not excluded. The invention affords particular advantages in the case of tailored blanks, where the weld quality constitutes an essential and fundamental condition. The semi-finished product obtained after welding must in fact undergo press operations which the welds previously made have to resist. It is therefore essential to make high-quality welds, which will be free from defects.

So far, there have been developed different methods for the production of tailored blanks, such as laser welding, resistance welding, and arc welding. Laser welding is, however, generally preferred as compared to other joining methods on account of the possibility of a wider range of applications, higher speed, lower costs, lower rates of wear of equipment, smaller extension of the heat-affected zone (HAZ), and better formability.

The high quality of the weld can be guaranteed by means of a continuous supervision of the fabrication method and control of specific characteristics of the product obtained. This can be achieved only with the use of reliable on-line method control systems. It is, in particular, important to provide systems for automatic and real-time monitoring of quality of the welding process, in so far as manual inspection leads to waste of time, is costly and is unable to detect systematic defects if not after a large number of defective parts has been produced.

In the past, there have been developed different schemes for monitoring laser welding, which comprise acoustic monitoring and video inspection, as well as various optical schemes that use sensors limited to spectral windows or spectroscopic analysis. There is, in particular, felt the need for a system for monitoring laser welding of tailored blanks on account of the instability of the laser process (formation of irregular plasma, variations in the density of laser power) and on account of the fact that the variation in quality of finish of the elements made of sheet metal that constitute the semi-finished product and their relative positioning can affect quality of the final weld.

The purpose of the present invention is to provide a system and a method for the monitoring of the quality of laser welds, for example welds obtained with $CO_2$ lasers, in particular, but not exclusively, of tailored blanks, which is based upon the analysis of the visible radiation coming from the process.

A further purpose of the invention is to provide a system and a method of the type referred to above that will be able to operate on line and in real time.

A particular purpose of the invention is to identify and locate laser-welding defects, such as:

- insufficient depth of penetration,
- misalignments of the joins of the welded pieces,
- presence of porosity,
- presence of defects.

As already mentioned, at present the problem of recognition of quality of a continuous laser weld, and consequently the identification of the weld defects listed above, takes place via off-line inspection by persons skilled in the branch, or else with automatic methods. The automatic solutions at present available, based upon sensor information, enable only partial identification of some types of defects. In addition, said systems are extremely sensitive to the different environmental conditions, to the type of materials involved, and to the set-up of the laser process. More in particular, the systems present on the market are based upon the generation of reference signals (associated to an optimal situation and/or to a situation of defectiveness). The identification of the defect takes place through an appropriate comparison between the signals of the process in question and the reference signals. The problem that is encountered most frequently in such systems is associated to the generation of the reference, which is characterized by the following problems:

1. Quite a high number of references is required (from 2 to 10 or more).
2. The production of reliable references calls for the presence of a skilled operator capable of certifying the goodness of the process and of guaranteeing the repeatability of the tests.
3. The generation of the references leads to a waste of material.
4. There exists an objective difficulty in generating, *a priori*, particular classes of defect necessary for obtaining the references.

5. The reference depends upon the type of materials and upon the treatments of the welding surfaces; it follows therefrom that a reference must be generated for each possible material/surface treatment pair.

A further purpose of the invention is to overcome all the drawbacks mentioned previously.

With a view to achieving the aforesaid purposes, the subject of the invention is a system and a method for monitoring laser welds, in which there are provided laser-welding means for focusing a laser beam on the structure to be welded, sensor means designed for detecting the visible radiation produced in the welding area and for emitting at output signals indicating said radiation, in which the signals emitted by the sensor means are processed so as to obtain an indication of the quality of the weld without the need for a comparison with reference signals.

The invention will now be described with reference to the annexed drawings, which are provided purely by way of non-limiting example and in which:

Figure 1 is a schematic view of an example of embodiment of the present invention; and
Figures 2, 3 and 4 are diagrams that illustrate the principles of operation of the invention.

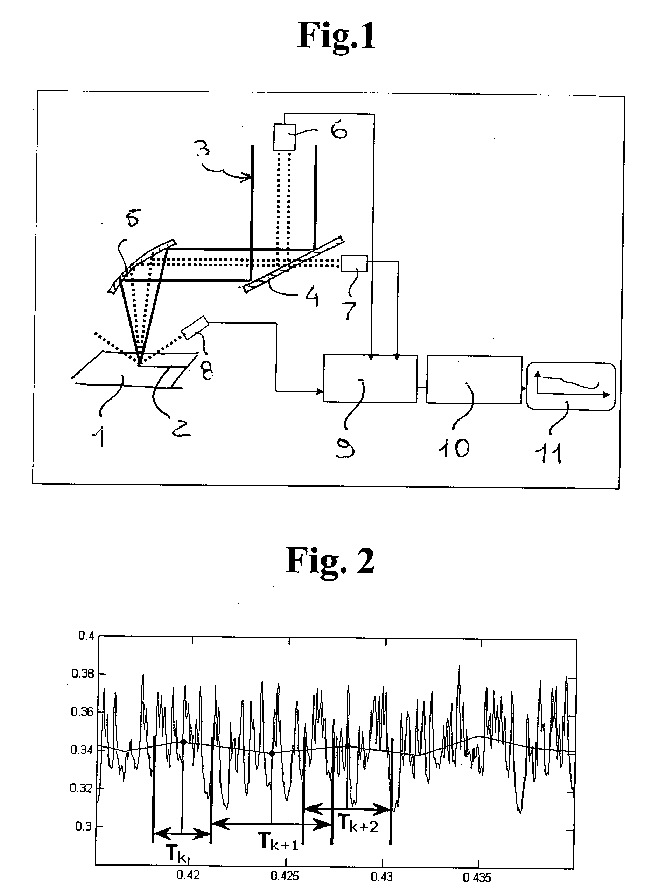

In Figure 1, the reference number 1 designates as a whole a "tailored blank" on which a continuous weld 2 is being made by focusing a laser beam 3 coming from a laser-welding head (not visible in the drawing), the said beam being subjected to successive reflections by means of two mirrors 4, 5. The system comprises a plurality of sensors 6, 7, 8 that receive the visible radiation reflected from the welding area. In the example illustrated, the sensor 8 is set adjacent to the welding area, the sensor 7 is set behind the mirror 4 (which is of a type that enables both reflection of the radiation and transmission through it of the return radiation in the direction of the sensor 7). The sensor 6 is set in the proximity of the welding head.

In general, analysis of the visible radiation coming from the process can be obtained by means of optical sensors, such as photodiodes or pyro-electrical sensors. Photodiodes are able to detect signals from the ultraviolet up to the near infrared. The availability of optical filters enables detection of the different signals generated during the process. Moreover, photodiodes enable a high signal-to-noise ratio to be achieved. Pyro-electrical sensors enable detection of signals in a wide bandwidth. The main drawbacks of pyro-electrical sensors are linked to their low mean power and to the need to use a chopper. On account of the advantages in terms of size, costs, signal-to-noise ratio, the system consequently preferably adopts sensors in the form of photodiodes, even though the use of sensors of a different type is not ruled out.

According to a preferred embodiment, the photodiode used had a spectral response of 190-1100 nm, an active area of 1.1 x 1.1 mm, and was provided with a quartz window, a focusing lens and an optical filter for selection of the radiation coming from the process.

Once again in Figure 1, the number 9 designates an anti-aliasing filter. The number 10 designates an A/D converter, whilst the block 11 designates the processing means of the output signals from the sensors, after their passage in the blocks 9, 10. In one example of embodiment, said means comprised a PCcard NI 6110E data-acquisition card, with an acquisition frequency of 5 Msamples per sec, and a personal computer of an 800-MHz Pentium III type.

The signal at input from the quality-control system is the signal from the photodiode. Each sensor detects the information regarding the radiation reflected from the welding process coming from the welding area. The signal is used to identify:

- insufficient depth of penetration;
- misalignment of the join in the assembly of the pieces;
- porosity;
- defectiveness.

The output of the quality-control system is the state of the weld (correct/incorrect) and, in the case of incorrect weld, the type of defect ("insufficient penetration", or else "incorrect assembly", or else "porosity", or else "defectiveness") and its position.

The basic idea of this new type of processing of the signals is based upon the observation of features common to the signals. It is possible to find two types of abnormal behaviour of the signal, corresponding to two classes of low-quality welds: defectiveness and porosity. Defectiveness is characterized by a drop for a short time both in the mean value of the signal and in the standard deviation of the signal, whilst porosity has the same characteristics of mean value and of standard deviation as the signal, but for a longer time and with a greater depth. The main difference between a good-quality and a poor-quality penetration lies in a big drop in the value of standard deviation of the signal.

The first step of processing downstream of sampling of the signals regards the extraction of the aforesaid features for the entire signal, i.e., mean value and standard deviation. The next step is to process the same features locally, on portions of signal, or "windows".

More in particular, the processing of the mean value of the signal requires:

- logic division of the signal S into windows, as illustrated in Figure 2; each window is appropriately superimposed upon the preceding one; and the width of a window and the optimal superimposition between consecutive windows is determined on the basis of the specific welding process;

- calculation of the mean for each window; the profile of the mean points generates a new signal $S_M$;
- selection of the windows having a mean value lower than a given threshold; the threshold is a function of S - for example, the threshold is represented by the mean value of S appropriately reduced by a value equal to the product of a parameter known as "tolerance" and the standard deviation of S:

$$index = find_{i \in S_M} (\mu_i \leq \mu - \sigma * tolerance)$$

and each window $F_i$ satisfying the aforesaid relation is labelled as potentially lacking quality; and

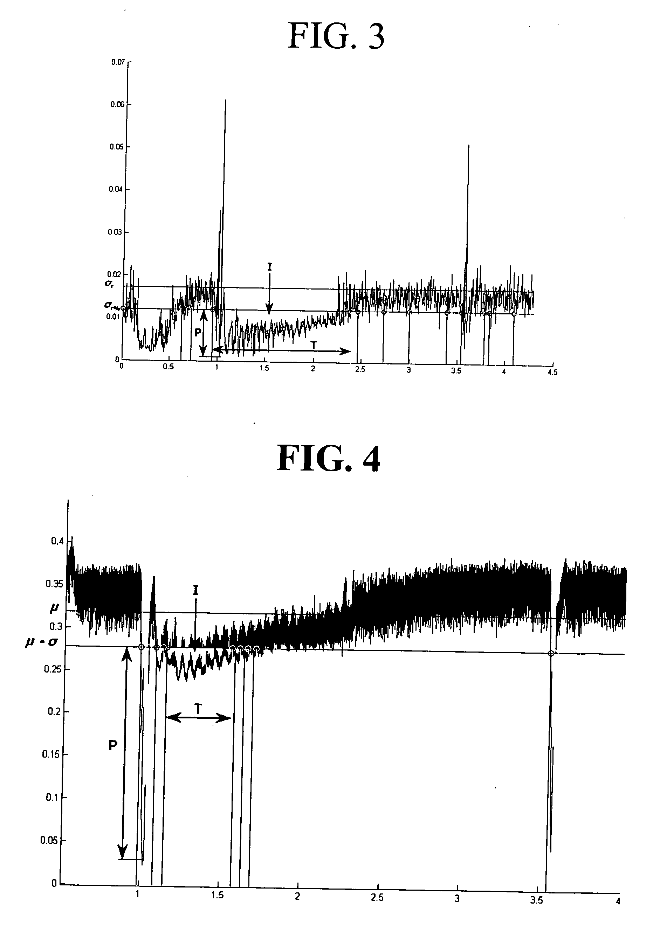

- possible grouping-together of the windows $F_i$ (which are contiguous and not contiguous by less than a certain distance) in macrowindows, and extraction, for each macrowindow, of the features; the features extracted constitute appropriate indices of local deviation of the signal evaluated on the overall signal
- examples of index of deviation extracted for each macrowindow are (Figure 3):

  • temporal width of the macrowindows (T);
  • maximum peak of the signal (P) inside the macrowindow; and
  • the intensity of the perturbation (I), calculated as the area between the curve $S_M$ and the threshold for the macrowindow.

In a similar way, the foregoing procedure is applied for the standard deviation of the signal (Figure 4). More in particular:

- division of the signal into windows, corresponding to the ones used for the processing of the mean;
- calculation of the standard deviation for each window; the profile obtained generates the signal $S_V$;
- selection of the windows having a value of standard deviation lower than a given threshold, which is a function of S:

$$index = find_{i \in S_V} (\sigma i \leq \sigma * tolerance)$$

each window $F_i$ satisfying the relation being labelled as potentially lacking quality; and

- possible grouping-together of the windows $F_i$ and extraction of the features - examples of index of deviation extracted from the particular signal are (Figure 4):

  • temporal amplitude of the macrowindows (T); and
  • maximum peak of the signal (P) inside the macrowindow.

Of course, without prejudice to the principle of the present invention, the details of construction and the embodiments may vary widely with respect to what is described and illustrated herein purely by way of example, without thereby departing from the scope of the present invention.

**Claims**

1. A system for monitoring laser welds, for example laser welds of semi-finished products made up of elements of sheet metal of different thicknesses and/or properties ("tailored blanks"), comprising: laser-welding means, for focusing a laser beam (3) on the structure to be welded; sensor means (6, 7, 8) designed for detecting the visible radiation produced in the welding area and for emitting at output signals indicating said radiation; and processing means (11) for processing the aforesaid signals at output from said sensor means,
   **characterized in that** said processing means are programmed for processing the aforesaid signals so as to obtain an indication of quality of the weld without the need for a comparison with reference signals.

2. The system according to Claim 1, **characterized in that** the aforesaid sensor means comprise a plurality of sensors (6, 7, 8) arranged, respectively, adjacent to a focusing head of the laser beam, adjacent to the welding area, and in an intermediate area in the path of the laser beam from the focusing head to the welding area.

3. The system according to Claim 1, **characterized in that** each sensor (6, 7, 8) consists of a photodiode.

4. The system according to Claim 3, **characterized in that** associated to each photodiode is an optical filter for selection of the radiation coming from the process.

5. The system according to Claim 3, **characterized in that** said photodiode has a spectral response of 190-1100 nm, an active area of 1.1 × 1.1 mm, a quartz window, and a focusing lens.

6. The system according to Claim 1, **characterized in that** it comprises an anti-aliasing filter (9).

7. The system according to Claim 1, **characterized in that** the aforesaid processing means are programmed for extracting features regarding the signal at output from the sensor means, such as, for example, mean value and standard deviation of the signal.

8. The system according to Claim 7, **characterized in that** said processing means are programmed for processing the same features locally, on portions of signals, or windows.

9. The system according to Claim 1, **characterized in that** the processing of the mean of the signal involves:

 - logic division of the signal S into windows, as illustrated in Figure 2; each window is appropriately superimposed upon the preceding one; and the width of a window and the optimal superimposition between consecutive windows is determined on the basis of the specific welding process;
 - calculation of the mean for each window; the profile of the mean points generates a new signal $S_M$;
 - selection of the windows having a mean value lower than a given threshold; the threshold is a function of S - for example, the threshold is represented by the mean value of S appropriately reduced by a value equal to the product of a parameter known as "tolerance" and the standard deviation of S:

$$index = find_{i \in S_M}(\mu_i \leq \mu - \sigma * tolerance)$$

 and each window $F_i$ satisfying the aforesaid relation is labelled as potentially lacking quality; and
 - possible grouping-together of the windows $F_i$ (which are contiguous and not contiguous by less than a certain distance) in macrowindows, and extraction, for each macrowindow, of the features; the features extracted constitute appropriate indices of local deviation of the signal evaluated on the overall signal
 - examples of index of deviation extracted for each macrowindow are (Figure 3):

   • temporal width of the macrowindows (T);
   • maximum peak of the signal (P) inside the macrowindow; and
   • the intensity of the perturbation (I), calculated as the area between the curve $S_M$ and the threshold for the macrowindow.

10. The system according to Claim 9, **characterized in that** the processing of the standard deviation of the signal comprises:

 - division of the signal into windows, corresponding to the ones used for the processing of the mean;
 - calculation of the standard deviation for each window; the profile obtained generates the signal $S_V$;
 - selection of the windows having a value of standard deviation lower than a given threshold, which is a function of S:

$$index = find_{i \in S_V}(\sigma_i \leq \sigma * tolerance)$$

 each window $F_i$ satisfying the relation being labelled as potentially lacking quality; and
 - possible grouping-together of the windows $F_i$ and extraction of the features - examples of index of deviation extracted from the particular signal are (Figure 4):

   • temporal amplitude of the macrowindows (T); and
   • maximum peak of the signal (P) inside the macrowindow.

11. A method for monitoring laser welds, for example welds of semi-finished products made up of elements of sheet metal of different thicknesses and/or properties ("tailored blanks"), in which a laser beam (3) is focused on the structure to be welded, the visible radiation produced in the welding area is detected by means of sensors designed for emitting signals indicating said radiation, and the signals at output from said sensor means are processed, said processing being executed so as to obtain an indication of the quality of the weld without the need for a comparison with reference signals.

12. The method according to Claim 11, **characterized in that** the aforesaid processing is performed by extracting features of the entire signal such as, for example, mean value and standard deviation of the signal, for subsequently processing the same features locally on portions of signal or windows.

13. The method according to Claim 12, **characterized in that** the processing of the mean value of the signal comprises:

 - logic division of the signal S into windows, as illustrated in Figure 2; each window is appropriately superimposed upon the preceding one; and the width of a window and the optimal superimposition between consecutive windows is determined on the basis of the specific welding process;
 - calculation of the mean for each window; the profile of the mean points generates a new signal $S_M$;
 - selection of the windows having a mean value lower than a given threshold; the threshold is a function of S - for example, the threshold is represented by the mean value of S appropriately reduced by a value equal to the product of a parameter known as "tolerance" and the standard deviation of S:

$$index = find_{i \in S_M}(\mu_i \leq \mu - \sigma * tolerance)$$

and each window $F_i$ satisfying the aforesaid relation is labelled as potentially lacking quality; and

- possible grouping-together of the windows $F_i$ (which are contiguous and not contiguous by less than a certain distance) in macrowindows, and extraction, for each macrowindow, of the features; the features extracted constitute appropriate indices of local deviation of the signal evaluated on the overall signal
- examples of index of deviation extracted for each macrowindow are (Figure 3):

  • temporal width of the macrowindows (T);
  • maximum peak of the signal (P) inside the macrowindow; and
  • the intensity of the perturbation (I), calculated as the area between the curve $S_M$ and the threshold for the macrowindow.

14. The method according to Claim 13, **characterized in that** processing of the mean deviation of the signal comprises:

- division of the signal into windows, corresponding to the ones used for the processing of the mean;
- calculation of the standard deviation for each window; the profile obtained generates the signal $S_v$;
- selection of the windows having a value of standard deviation lower than a given threshold, which is a function of S:

$$index = find_{i \in S_V}(\sigma_i \leq \sigma * tolerance)$$

each window $F_i$ satisfying the relation being labelled as potentially lacking quality; and
- possible grouping-together of the windows $F_i$ and extraction of the features - examples of index of deviation extracted from the particular signal are (Figure 4):

  • temporal amplitude of the macrowindows (T); and
  • maximum peak of the signal (P) inside the macrowindow.

The foregoing substantially as described and illustrated and for the purposes specified herein.

# Fig.1

# Fig. 2

# FIG. 3

# FIG. 4

European Patent Office

## EUROPEAN SEARCH REPORT

Application Number

EP 03 00 7729

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 00 41837 A (COSMA POWERLASERS LIMITED ;GU HONGPING (CA)) 20 July 2000 (2000-07-20) * the whole document * | 1-14 | B23K26/03 |
| X | WO 99 14640 A (OGMEN MELIH ;POWERLASERS LTD (CA)) 25 March 1999 (1999-03-25) * the whole document * | 1,3,4,7, 11,12 | |
| X | US 6 188 041 B1 (KIM MIN-SUK ET AL) 13 February 2001 (2001-02-13) * the whole document * | 1,11 | |
| X,P | EP 1 275 464 A (FIAT RICERCHE) 15 January 2003 (2003-01-15) * the whole document * | 1,3-8, 11,12 | |
| A | DE 199 62 967 A (BOSCH GMBH ROBERT) 12 July 2001 (2001-07-12) * the whole document * | 9,10,13, 14 | |
| A | US 4 663 513 A (WEBBER TIM) 5 May 1987 (1987-05-05) * the whole document * | 1-14 | TECHNICAL FIELDS SEARCHED (Int.Cl.7) B23K |
| A | US 5 651 903 A (SHIRK BRYAN W) 29 July 1997 (1997-07-29) * the whole document * | 1-14 | |

The present search report has been drawn up for all claims

| Place of search | Date of completion of the search | Examiner |
|---|---|---|
| MUNICH | 8 August 2003 | De Backer, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 03 00 7729

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2003

| Patent document cited in search report | | Publication date | Patent family member(s) | | Publication date |
|---|---|---|---|---|---|
| WO 0041837 | A | 20-07-2000 | AU<br>WO<br>CA | 2087400 A<br>0041837 A1<br>2323802 A1 | 01-08-2000<br>20-07-2000<br>20-07-2000 |
| WO 9914640 | A | 25-03-1999 | AU<br>BR<br>CA<br>WO<br>EP | 9150298 A<br>9812209 A<br>2301692 A1<br>9914640 A2<br>1012680 A2 | 05-04-1999<br>18-07-2000<br>25-03-1999<br>25-03-1999<br>28-06-2000 |
| US 6188041 | B1 | 13-02-2001 | NONE | | |
| EP 1275464 | A | 15-01-2003 | IT<br>EP | TO20010688 A1<br>1275464 A1 | 13-01-2003<br>15-01-2003 |
| DE 19962967 | A | 12-07-2001 | DE | 19962967 A1 | 12-07-2001 |
| US 4663513 | A | 05-05-1987 | NONE | | |
| US 5651903 | A | 29-07-1997 | NONE | | |

EPO FORM P0459

For more details about this annex : see Official Journal of the European Patent Office, No. 12/82